Europäisches Patentamt

(19) European Patent Office (11) Numéro de publication : **0 217 686**
**B1**
Office européen des brevets

(12) **FASCICULE DE BREVET EUROPÉEN**

(45) Date de publication du fascicule du brevet : (51) Int. Cl.⁴ : **B 64 C 31/02**, B 64 D 17/72
**19.10.88**

(21) Numéro de dépôt : **86401692.8**

(22) Date de dépôt : **29.07.86**

(54) Perfectionnements apportés aux engins volants du type à voilure parachute.

(30) Priorité : **02.08.85 FR 8511865**

(43) Date de publication de la demande :
**08.04.87 Bulletin 87/15**

(45) Mention de la délivrance du brevet :
**19.10.88 Bulletin 88/42**

(84) Etats contractants désignés :
**BE DE GB IT**

(56) Documents cités :
**EP-A- 0 130 925**
**DE-A- 3 321 499**
**GB-A- 2 098 563**
**GB-A- 2 127 764**
**US-A- 2 957 664**
**US-A- 4 445 654**

(73) Titulaire : **AERONAUTIQUE SERVICE**
**33 rue Galilée**
**F-75016 Paris (FR)**

(72) Inventeur : **Ranjon, Marc**
**"Les Ages"**
**F-36300 Le Blanc (FR)**

(74) Mandataire : **Orès, Bernard et al**
**Cabinet ORES 6, Avenue de Messine**
**F-75008 Paris (FR)**

Jouve, 18, rue St-Denis, 75001 Paris, France

## Description

La présente invention est relative à un engin volant du type pourvu d'une voilure parachute et plus particulièrement à des perfectionnements apportés à un tel engin.

Des engins volants du type susdit sont déjà connus et ils comprennent un tricycle comportant un châssis tubulaire en aluminium soudé et un moteur à hélice fixé sur un treillis. La voilure parachute est fixée au châssis par l'intermédiaire de suspentes de sustentation. La commande de direction, au sol comme en vol, se fait par l'intermédiaire d'un palonnier qui est commandé par les pieds du pilote et auquel sont fixées des suspentes de gouverne (ou de direction) droites et gauches pour le virage à droite et à gauche, respectivement. Le palonnier est conjugué avec la roue avant, les deux roues arrière étant amorties pour constituer ce qu'on appelle « train principal d'atterrissage ».

Or, les engins volants existants présentent un certain nombre d'inconvénients, notamment :

en ce qui concerne l'ouverture de la voilure parachute, qui est normalement stockée dans un sac, celle-ci requiert l'exécution, avec moteur à l'arrêt, des opérations préalables suivantes :

déballage de la voilure parachute, et

étalage de cette voilure sur le sol, derrière l'engin,

après quoi seulement le pilote peut s'asseoir et commander le démarrage du moteur, l'ouverture de la voilure se faisant par l'action du vent sous l'effet du mouvement de l'engin au sol ; il est donc clair que, dans ces conditions, l'ouverture de la voilure parachute ne peut pas se faire avec le moteur en marche, pendant le roulage au sol, notamment lorsqu'on utilise l'engin comme un véhicule automobile terrestre tous terrains, ce qui réduit les performances de ce type d'engin et en particulier empêche la possibilité de transformer à volonté cet engin d'un engin terrestre en un engin volant, notamment face à un obstacle existant au sol ou au gré du pilote, sans devoir arrêter le moteur ;

en ce qui concerne la commande de direction à l'aide du palonnier, ce dernier comporte deux barres indépendantes droite et gauche actionnées chacune respectivement par le pied droit ou par le pied gauche du pilote, suivant le sens du virage souhaité ; or, s'il est vrai que cette disposition permet le freinage de l'engin et la manœuvre dite « arrondi » à l'aide des pieds du pilote, par contre elle présente l'inconvénient, notamment pour les débutants, consistant en ce que, lorsque le pilote. désire virer à droite ou à gauche, si celui-ci appuie contemporairement sur les deux barres de direction du palonnier, au lieu d'un virage on aura un freinage indésiré qui peut être dangereux parce qu'il peut entraîner un risque de décrochage ;

en ce qui concerne l'équilibrage dynamique de l'engin en fonction du poids du pilote, celui-ci utilise des moyens compliqués et pas faciles à manier : il s'agit notamment de tubes télescopiques, qui divisent le châssis en deux parties susceptibles de se rapprocher ou de s'éloigner, ou de câbles coopérant avec des tendeurs, dont la conception rend les temps de réglage longs.

La présente invention a pour but de supprimer les inconvénients desdits engins volants, à savoir de pourvoir à un engin volant du type pourvu d'une voilure parachute qui répond mieux aux nécessités de la pratique que les engins visant au même but antérieurement connus, notamment en ce que :

le décollage de l'engin peut se faire également pendant le roulage normal au sol, sans devoir arrêter le moteur pour transformer l'engin terrestre en un engin volant ;

la commande de direction de l'engin se fait sans risque de fausse manœuvre, et notamment de freinage indésiré et donc sans risque de décrochage ;

la fixation des suspentes de sustentation est adoptable au poids du pilote ce qui permet un équilibrage parfait de l'engin donnant au pilote une sensation de confort en vol.

Par rapport au document EP-A-130 925 qui décrit déjà un engin du type comportant en combinaison :

un châssis tubulaire sur roues ;

un moteur équipé d'une hélice ;

une voilure du type parachute qui est destinée à rendre l'engin volant, sous l'action d'entraînement du moteur et l'effet concomitant du vent, cette voilure étant fixée audit châssis par des suspentes de sustentation, droites et gauches, et étant stockée dans un sac en condition de non-utilisation de l'engin en tant qu'engin volant ;

un siège de pilote monté sur ledit châssis ;

un palonnier de commande de direction de l'engin au sol et en vol, actionné par les pieds du pilote, qui actionne à son tour des suspentes de gouverne, droites et gauches, reliées latéralement à la voilure parachute, ladite hélice et ledit siège de pilote, et donc le pilote, étant protégés par des arceaux tubulaires faisant partie intégrante dudit châssis tubulaire, l'invention est caractérisée en ce que le sac contenant la voilure parachute est équipé de moyens d'éjection, connus en soi, de la voilure parachute permettant que l'ouverture automatique de cette dernière, sous l'action d'entraînement du moteur et l'effet concomitant du vent, ait lieu pendant le roulage normal au sol sans devoir arrêter préalablement le moteur, lesdits moyens d'éjection étant mécaniques ou pyrotechniques ou d'autre type connu en soi.

En outre, l'engin conforme à l'invention, comportant une roue avant et deux roues arrière, peut être équipé également :

· d'un premier palonnier constitué par une barre unique de commande de direction actionnée par les pieds du pilote et pivotant autour d'un axe unique vertical avec lequel est conjuguée ladite roue avant, les deux extrémités de ladite barre unique étant reliées aux suspentes de gouverne droites et gauches, respectivement ;

et/ou de moyens de fixation réglable des suspentes de sustentation droites et gauches en fonction du poids du pilote et donc du centre de gravité de l'ensemble engin/pilote.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés auxquels :

la figure 1 est une vue de dessus de l'engin conforme à l'invention, avec la voilure parachute repliée dans un sac à parachute équipé des moyens d'éjection de la voilure selon l'invention ;

la figure 2, est une vue en élévation frontale de l'engin de la figure 1, mais représenté avec la voilure parachute déployée ;

la figure 3 est une vue en élévation latérale de l'engin illustré à la figure 1 ;

les figures 4, 5 et 6 sont des vues latérales, de dessus et de profil, respectivement, des moyens de fixation réglable des suspentes de sutentation droites et gauches conformes à l'invention, la figure 4 étant représentée avec arrachement partiel.

Il doit être bien entendu, toutefois que ces dessins et les parties descriptives correspondantes, sont donnés uniquement à titre d'illustration de l'objet de l'invention, dont ils ne constituent en aucune manière une limitation.

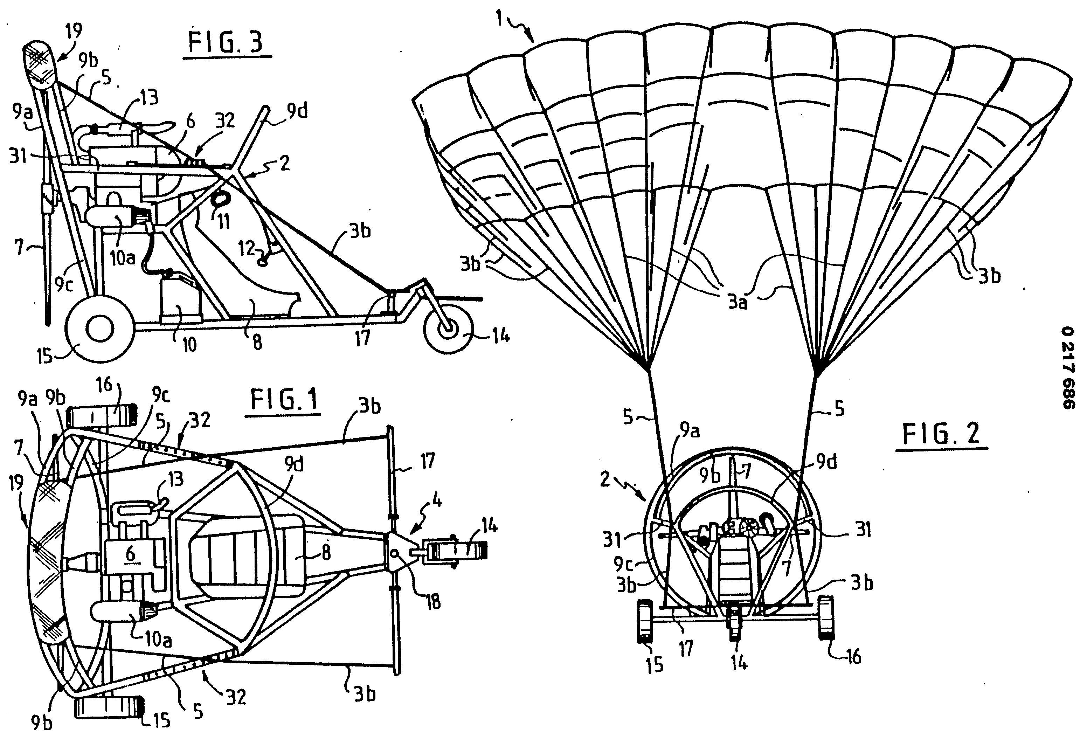

L'engin volant représenté aux figures 1 à 3 est du type comportant une voilure parachute 1, qui est repliée dans un sac 19, lorsqu'elle n'est pas utilisée, et qui est reliée à un châssis 2 à structure tubulaire, notamment en aluminium soudé, par l'intermédiaire de suspentes de sustentation 3a, la commande de direction se faisant à l'aide d'un palonnier 4 relié à des suspentes de gouverne 3b qui se rattachent en haut aux bords latéraux de la voilure 1 pour s'acheminer ensuite vers le bas conjointement avec lesdites suspentes de sustentation 3a dans les câbles 5 et continuer indépendamment de ces dernières vers ledit palonnier.

Le châssis supporte un moteur 6 équipé d'une hélice 7 et un siège de pilote 8, et comporte des arceaux de protection du pilote et de l'hélice 7, tels que 9a, 9b, 9c, 9d. Cette hélice est constituée en particulier par une hélice quadripale, en matériaux composites, dont la fonction est de favoriser l'ouverture de la voilure parachute au départ.

Sur les figures on peut aussi remarquer la présence d'un réservoir de combustible 10 avec une pompe 10a. Les références numériques 11, 12 et 13 représentent respectivement le câble de démarrage du moteur, la poignée ou manette de gaz permettant de contrôler la montée, la croisière ou la descente de l'engin et le tuyau d'échappement.

Le châssis repose aussi sur trois roues, dont une roue avant 14 et deux roues arrière 15 et 16, ces dernières étant amorties de même que le siège 8 tandis que la roue avant 14 est conjuguée, de façon connue en soi, avec ledit palonnier 4, en sorte que l'actionnement de ce dernier agit non seulement sur lesdites suspentes de gouverne, mais aussi sur la roue avant 14.

Conformément à l'invention, le palonnier 4 est constitué par une barre unique 17 de commande de direction pivotant autour d'un axe vertical 18 de conjugaison entre le palonnier et la roue avant 14, sous l'action des pieds du pilote.

Pour tourner à droite ou à gauche, et ceci au sol comme en vol, il suffit d'actionner ladite barre unique par l'intermédiaire du pied droit ou gauche, respectivement, ce qui a pour effet de solliciter à traction les suspentes de gouverne 3b droites ou gauches, respectivement, sans toutefois entraîner des risques de fausse manœuvre.

En fait, si le pilote — qu'il soit débutant ou non — actionne simultanément par erreur, la barre unique 17 avec ses deux pieds, cette fausse manœuvre n'entraîne aucune sollicitation des suspentes de gouverne 3b et donc aucune action de freinage, contrairement à ce qui se passe dans les mêmes conditions avec les engins volants existants, l'absence d'une action de freinage indésirée éliminant tout risque de décrochage.

Il va de soi qu'avec ce type de palonnier à barre de commande unique, le freinage se fait en tirant simultanément les suspentes avec les mains.

Egalement conformément à l'invention, on équipe le sac 19, contenant la voilure 1 à l'état replié, de moyens d'éjection, de type connu en soi (et donc non représentés) de cette voilure, ce qui permet le décollage de l'engin lorsque celui-ci est en train de rouler au sol, sans devoir arrêter le moteur pour accomplir les manœuvres de décollage et d'étalage au sol manuelles nécessaires avec les engins existants. La figure 2 montre la voilure parachute 1 à l'état déplié après l'entrée en fonction de ses moyens d'éjection, ces derniers pouvant être constitués par des moyens mécaniques, et notoirement par une poignée d'ouverture, ou par des moyens pyrotechniques.

Il va de soi que le sac peut être positionné dans un point a priori quelconque du châssis, mais que de préférence il est disposé sur sa partie haute arrière, tel que le montrent les figures 1 et 3, les câbles 5 rattachant les suspentes de sustentation 3a de la voilure 1-repliée dans le sac aux tubes latéraux sensiblement horizontaux 31 du châssis 2, par l'intermédiaire des moyens de fixation réglable 32 conformes à l'invention.

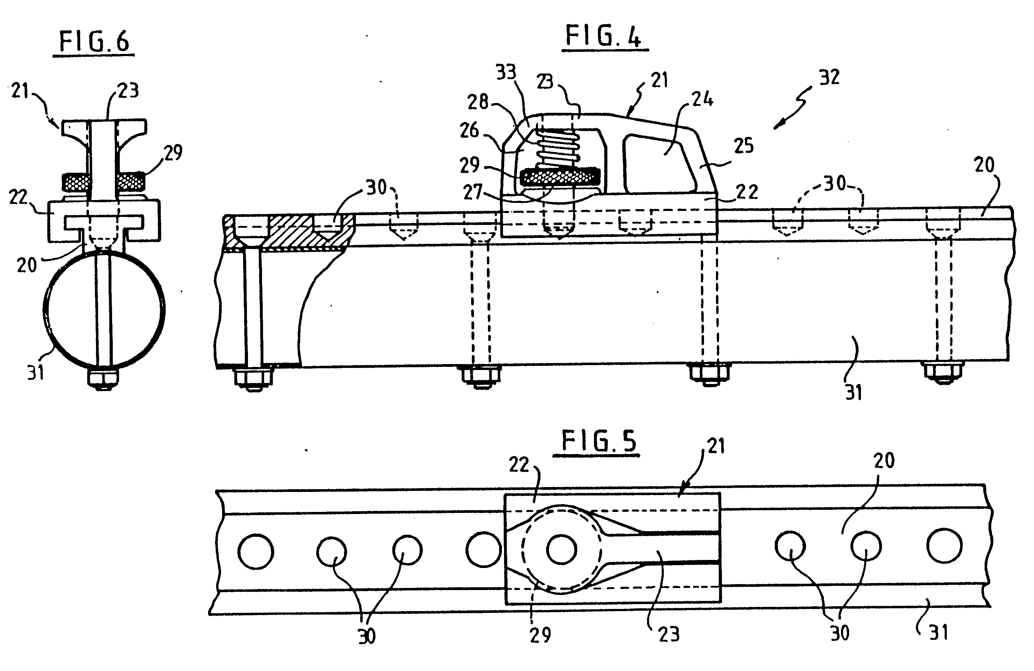

Ces moyens de fixation réglable desdites suspentes de sustentation 3a sont représentés aux figures 4 à 6, et correspondent à un mode de réalisation préféré mais non limitatif. Ils comprennent un rail de guidage 20 en T d'un coulisseau 21 pourvu d'une base 22 en ⊏, à savoir en forme de ⊔ ouvert sur un côté, coulissant le long du segment transversal et sensiblement horizontal du T. Cette base est surmontée par une poignée centrale 23 pourvue d'un anneau 25 délimitant une fenêtre 24 par laquelle passent les suspentes de sustentation 3a, provenant dudit câble 5, qui sont fixées autour de l'anneau 25, ainsi que les suspentes de gouverne 3b, elles aussi provenant du câble 5 mais se dirigeant vers le bas pour se rattacher audit palonnier 4.

La poignée 23 est aussi pourvue d'une autre fenêtre (ou d'un logement) 26 qui est délimitée par un cadre ou anneau 33 adjacent à l'anneau 25 et destiné à loger un axe 27 à ressort 28 pour le verrouillage automatique, cet axe coopérant avec un disque de déverrouillage 29 permettant d'extraire l'arbre 27 d'un trou de blocage 30 pour l'introduire dans un autre trou similaire, ces trous 30 étant ménagés axialement sur le segment transversal et horizontal du T de guidage.

Un rail de guidage 20 est fixé sur chacun desdits deux tubes latéraux 31 sensiblement horizontaux du châssis 2, notamment par boulonnage (cf. aussi la référence numérique 32 de la figure 1).

L'espacement entre deux trous 30 contigus est calculé de façon appropriée à permettre un réglage efficace en fonction du poids du pilote. Il est clair que, si la position initiale du coulisseau 21 (et donc du point de fixation des suspentes de sustentation) est celle de la figure 4 et si le centre de gravité de l'ensemble engin/pilote se trouve à gauche ou à droite de cette position initiale, il suffit de saisir le coulisseau 21 par sa poignée 23 tout en soulevant le disque de déverrouillage 29 et de déplacer le coulisseau vers la gauche ou vers la droite, respectivement, de façon à insérer l'axe 27 de verrouillage dans celui des trous 30 qui est contenu sensiblement dans le plan passant par la résultante des forces agissant sur l'ensemble engin/pilote en vol.

Cette opération de réglage du point de fixation des suspentes de sustentation de la voilure parachute peut être facilitée en graduant le rail 20, c'est-à-dire en associant à chaque trou 30 une valeur de poids du pilote pour laquelle on obtient l'équilibre dynamique de l'ensemble engin/pilote suspendu, directement en fonction du poids du pilote, dont la fourchette de variation est connue avec une très bonne approximation, et en associant au coulisseau 21 un index ou repère (l'échelle de valeur de poids et l'index ne sont pas représentés).

## Revendications

1. Engin du type comportant en combinaison :
   un châssis tubulaire (2) sur roues (14, 15, 16) ;
   un moteur (6) équipé d'une hélice (7) ;
   une voilure du type parachute (1) qui est destinée à rendre l'engin volant, sous l'action d'entraînement du moteur (6) et l'effet concomitant du vent, cette voilure (1) étant fixée audit châssis (2) par des suspentes de sustentation (3a), droites et gauches, et étant stockée dans un sac (19) en condition de non-utilisation de l'engin en tant qu'engin volant ;
   un siège (8) de pilote monté sur ledit châssis (2) ;
   un palonnier (4) de commande de direction de l'engin au sol et en vol, actionné par les pieds du pilote, qui actionne à son tour des suspentes de gouverne (3b), droites et gauches, reliées latéralement à la voilure parachute (1), ladite hélice (7) et ledit siège (8) de pilote, et donc le pilote, étant protégés par des arceaux tubulaires (9a, 9b, 9c, 9d) faisant partie intégrante dudit châssis tubulaire (2), lequel engin est caractérisé en ce que le sac (19) contenant la voilure parachute (1) est équipé de moyens d'éjection, connus en soi, de la voilure parachute (1) permettant que l'ouverture automatique de cette dernière, sous l'action d'entraînement du moteur et l'effet concomitant du vent, ait lieu pendant le roulage normal au sol sans devoir arrêter préalablement le moteur (6), lesdits moyens d'éjection étant mécaniques ou pyrotechniques ou d'autre type connu en soi.

2. Engin selon la revendication 1, comportant en particulier une roue avant (14) conjuguée avec ledit palonnier (4) et deux roues arrière (15, 16), caractérisé en ce que le palonnier (4) est constitué par une barre unique (17) de commande de direction actionnée par les pieds du pilote et pivotant autour d'un axe unique vertical (18) avec lequel est conjuguée ladite roue avant (14), les deux extrémités de ladite barre unique (17) étant reliées aux suspentes de gouverne (3b) droites et gauches, respectivement.

3. Engin selon l'une quelconque des revendications 1 ou 2, caractérisé en ce que celui-ci comporte en outre des moyens de fixation réglable (32) des suspentes de sustentation (3a) droites et gauches en fonction du poids du pilote et donc du centre de gravité de l'ensemble engin/pilote.

4. Engin selon la revendication 3, caractérisé en ce que lesdits moyens de fixation réglable (32) de chacun des deux groupes de suspentes de sustentation (3a), droites et gauches, sont constitués par :
   un rail de guidage (20) qui est destiné à être fixé, de préférence par boulonnage, sur une portion tubulaire (31) du châssis (2) disposée à droite ou à gauche du siège (8) de pilote, suivant que le groupe de suspentes de sustentation (3a) à fixer soit le groupe de droite ou de gauche, respectivement, et sur lequel est ménagée une série de trous (30) espacés de façon appropriée, et
   un coulisseau (21) comportant une base (22) qui est destinée à coulisser le long du rail de guidage (20), et une poignée centrale de manœuvre (23) faisant saillie de cette base (22), laquelle poignée (23) est pourvue d'un anneau (25) de fixation du groupe de suspentes de sustentation (3a) correspondantes et d'un axe de verrouillage (27) qui traverse la base (22) du coulisseau (21) et pénètre dans un des trous (30) du rail de guidage (20) et qui est maintenu en position de verrouillage par l'action d'un ressort (28) comprimant un disque (29) solidaire de l'axe (27), l'ensemble axe/ressort/disque (27, 28, 29) étant logé dans un logement (26) délimité par une structure (33) sensiblement en forme d'anneau adjacent audit anneau de fixation (25), ledit ressort (28) étant disposé entre le disque (29) et la voûte dudit logement (26), en sorte que le déverrouillage du coulisseau (21) est obtenu en soulevant ledit disque (29) contre l'action du ressort (28), ce qui permet d'extraire l'axe (27) du trou (30) correspondant à une certaine position initiale de verrouillage pour l'introduire dans un autre trou de ladite série de trous (30) ménagée sur le rail de guidage (20), et ce en fonction de la position du centre de gravité de l'ensemble engin/pilote.

5. Engin selon la revendication 4, caractérisé en ce que ledit rail de guidage est en forme de T et la base dudit coulisseau est en forme de Ⅽ , à savoir en forme de ⬚ ouvert sur un côté de manière à permettre son coulissement le long du segment vertical du T et à être retenue par le segment horizontal du T qui est enveloppé par ladite base.

6. Engin selon la revendication 5, caractérisé en ce que sur le rail de guidage (20) est ménagée une échelle de valeurs associant à chaque trou de verrouillage (30) une valeur correspondant au poids d'un pilote pour lequel l'engin — conduit par ce pilote et suspendu en vol auxdites suspentes de sustentation (3a), gauches et droites, — se trouve en équilibre dynamique, le coulisseau (21) étant pourvu d'un moyen de repère ou index facilitant son positionnement sur le rail (20) suivant le poids du pilote.

**Claims**

1. An engine of the type comprising in combination :

a tubular frame (2) on wheels (14, 15, 16) ;

a motor (6) equipped with a propeller (7) ;

an aerofoil of the parawing type (1) provided in order to make the engine into a flying one, under the driving action of the motor (6) and the concomitant effect of the wind, this aerofoil (1) being fixed to the said frame (2) by left and right lifting suspending ropes (3a), and being stored in a pack (19), under no-use condition of the engine as a flying engine ;

a pilot seat (8) mounted on the said frame (2) ;

a rudder bar (4) for the steering control of the engine on the ground or in flight, actuated by the pilot's feet, which further actuates the right and left steering suspending ropes (3b), linked laterally to the parawing (1), the said propeller (7) and the said pilot seat (8), and thus the pilot, being protected by tubular ring bows (9a, 9b, 9c, 9d) being integrated part of the said tubular frame (2), the said engine being characterized in that the pack (19) containing the parawing (1) is equipped with ejection means, of a well known type, of the parawing enabling the automatic opening of this latter, under the driving action of the motor and the concomitant effect of the wind, to take place during the normal rolling on the ground, without having to shut down previously the motor (6), the said ejection means being either mechanical or pyrotechnical or of any other known type.

2. An engine according to claim 1, comprising in particular a front wheel (14) combined with the said rudder bar (4) and two rear wheels (15, 16), characterized in that the rudder bar (4) is constituted by a single steering control bar (17) actuated by the pilot's feet and swivelling around a single vertical axis (18) to which is coupled the said front wheel (14), the two ends of the said single bar (17) being linked respectively to the right and left steering suspending ropes (3b).

3. An engine according to any one of claims 1 or 2, characterized in that this latter comprises also adjustable fastening means (32) of the right and left suspending ropes (3a) in relation to the pilot's weight and thus with the centre of gravity of the pilot/engine assembly.

4. An engine according to claim 3, characterized in that the said adjustable fastening means (32) of each one of the two groups of the left and right lifting suspending ropes (3a) are constituted by :

a guiding rail (20), provided for being fastened, preferably by nuts and bolts, on a tubular portion (31) of the frame (2) arranged either left or right of the pilot seat (8), according to whether the group of lifting suspending ropes (3a) to be fastened is the right or left group respectively, and on which is provided a series of holes (30) spaced in a suitable way, and

a slide (21) comprising a base (22) provided for sliding along the guiding rail (20) and a central operating handle (23) projecting on this base (22), the said handle (23) having a fastening ring (25) of the corresponding lifting suspending ropes (3a) and a locking axis (27) which comes through the base (22) of the slide (21) and enters into one of the holes (30) of the guiding rail (20) and which is maintained in a locking position under the action of a spring (28) which compresses a disc (29) solidly fixed to the axis (27), the whole assembly axis/spring/disc (27, 28, 29) being located in a recess (26) bounded by a structure (33) roughly ring-shaped adjacent to the said fastening ring (25) the said spring (28) being placed between the disc (29) and the vault of the said recess (26), so that the unlocking of the slide (21) is obtained by lifting the said disc (29) against the spring (28) action, this enabling the extraction of the axis (27) from the hole (30) corresponding to a certain initial locking position in order to insert it in another hole of the said series of holes (30) provided on the guiding rail (20) and this in relation to the position of the centre of gravity of the engine/pilot assembly.

5. An engine according to claim 4, characterized in that the said guiding rail is T-shaped and the base of the said slide is Ⅽ -shaped, that is ⬚ -shaped with one side open, in order to enable its sliding along the T vertical segment and to be retained by the T horizontal segment which is shrouded by the said base.

6. An engine according to claim 5, characterized in that a scale of values is provided on the guiding rail (20), the said scale associating to each locking hole (30) a value corresponding to the weight of a pilot for which the engine manned by this pilot and suspended in flight to the said left and right lifting suspending ropes (3a), is in dynamic balancing, the slide (21) being provided with mark or index means facilitating its positioning on the rail (20) according to the pilot's weight.

**Patentansprüche**

1. (Flug)Gerät vom Typ, der in Kombination umfaßt :

ein röhrenförmiges Chassis (2) auf Rädern 14, 15, 16 ;

einen Motor 6, ausgestattet mit einer Schraube (7) ;

ein Tragwerk vom Fallschirmtyp (1), das dazu bestimmt ist, das Gerät in den Flugzustand unter der Antriebswirkung des Motors (6) und der gleichzeitigen Wirkung des Windes zu versetzen, wobei das Fallschirmtragwerk (1) an dem Chassis (2) über rechte und linke Stützfangleinen (3a) befestigt ist und in einem Sack (19) in Nichtbenutzungsstellung des Gerätes als Fluggerät gelagert ist ;

einen auf diesem Chassis (2) gelagerten Pilotsitz (8) ;

einen Steuerknüppel (4) für die Lenksteuerung des Gerätes zu Lande und im Flug, betätigt durch die Füße des Piloten, der seinerseits die rechten und linken Fangleinen des Ruders (3b) betätigt, die seitlich mit dem Fallschirmtragwerk (1) verbunden sind, wobei diese Schraube (7) und dieser Pilotsitz (8) und damit der Pilot durch Röhrenbügel (9a, 9b, 9c, 9d) geschützt sind, welche integralen Teil dieses röhrenförmigen Chassis (2) bilden, dadurch gekennzeichnet, daß der das Fallschirmtragwerk (1) enthaltende Sack (19) mit an sich bekannten Auswerfereinrichtungen für das Fallschirmtragwerk (1) versehen ist, die ermöglichen, daß das selbsttätige Öffnen des letzteren unter der Antriebswirkung des Motors und der gleichzeitigen Wirkung des Windes während des normalen Rollens auf dem Erdboden stattfindet, ohne daß vorher der Motor (6) stillgesetzt werden müßte, wobei die Auswerfereinrichtungen vom mechanischen oder pyrotechnischen oder anderem an sich bekannten Typ sind.

2. (Flug)Gerät nach Anspruch 1, insbesondere mit einem Vorderrad (14), das mit diesem Steuerknüppel (4) und zwei Hinterrädern (15, 16) konjugiert ist, dadurch gekennzeichnet, daß der Steuerknüppel (4) gebildet wird durch eine einzige Richtungssteuerstange (17), die von den Füßen des Piloten betätigt ist und um eine einzige vertikale Achse (18) verschwenkt, mit der dieses Vorderrad (14) konjugiert ist, wobei die beiden Enden dieser einzigen Stange (17) mit den rechten und linken Steuerfangleinen (3b) jeweils verbunden sind.

3. (Flug)Gerät nach nach einem der Ansprüche 1 oder 2, dadurch gekennzeichnet, daß es zusätzlich zu den Einrichtungen der regelbaren Befestigung (32) der rechten und linken Trägerfangleinen (3a) als Funktion des Gewichts des Piloten und damit des Schwerpunktes der aus Fluggerät (Pilot) bestehenden Anordnung umfaßt.

4. (Flug)Gerät nach Anspruch 3, dadurch gekennzeichnet, daß diese Einrichtungen zur regelbaren Befestigung (32) jeder der beiden rechten und linken Fangleinen-Trägergruppen (3a) gebildet sind durch :

eine Führungsschiene (20), die dazu bestimmt ist, vorzugsweise vermittels Verschraubens an einem röhrenförmigen Teil (31) des Chassis (2) befestigt zu werden, welches rechts und links des Pilotensitzes (8) vorgesehen ist, je nachdem, ob die Gruppe von zu fixierenden Trägerfangleinen (3a) die rechte bzw. linke Gruppe ist und auf dem eine Reihe unter geeignetem Abstand angeordneter Löcher (30) ausgespart ist, und

ein Gleitstück (21) mit einer Basis (22), die dazu bestimmt ist, längs der Führungsschiene (20) zu gleiten und einen zentralen Betätigungsknopf (23), der von dieser Basis (22) vorsteht, wobei der Knopf (23) mit einem Ring (25) zur Befestigung der Gruppe von entsprechenden Trägerfangleinen (3a) und einer Verriegelungsachse (27) versehen ist, welche die Basis (22) des Gleitstücks (21) durchsetzt und in eines der Löcher (30) der Führungsschiene (20) eintritt und der in Verriegelungsstellung durch die Wirkung einer Feder (28) gehalten ist, die eine fest mit der Achse (27) verbundene Scheibe (29) komprimiert, wobei die aus Achse/Feder/Scheibe (27, 28, 29) bestehende Anordnung in einem Lager (26) untergebracht ist, welches durch eine Konstruktion (33) im wesentlichen in Form eines diesem Befestigungsring (25) benachbarten Ring begrenzt ist, wobei die Feder (28) zwischen der Scheibe (29) sowie der gewölbten Ausbildung dieses Lagers (26) derart angeordnet ist, daß das Entriegeln des Gleitstückes (21) erhalten wird, indem man diese Scheibe (29) gegen die Wirkung der Feder (28) anhebt, was es ermöglicht, die Achse (27) aus dem Loch (30) entsprechend einer gewissen Anfangsverriegelungsstellung herauszuziehen, um sie in ein anderes Loch dieser Reihe von Löchern (30) einzuführen, welche auf der Führungsschiene (20) vorgesehen ist, und zwar als Funktion der Lage des Schwerpunktes der aus (Flug)Gerät/Piloten bestehenden Anordnung.

5. (Flug)Gerät nach Anspruch 4, dadurch gekennzeichnet, daß diese Führungsschiene die Form eines T hat und daß die Basis dieses Gleitstückes die Form eines ⊏ nämlich die Form eines ⊓ hat, das auf einer Seite offen ist, derart, daß sein Gleiten längs des vertikalen Schenkels des T möglich wird und daß es durch das horizontale Segment des T gehalten ist, welches durch diese Basis umhüllt ist.

6. (Flug)Gerät nach Anspruch 5, dadurch gekennzeichnet, daß auf der Führungsschiene (20) eine Skala mit Werten angeordnet ist, die jedem Verriegelungsloch (30) einen Wert entsprechend dem Gewicht eines Piloten zuordnet, für den das (Flug)Gerät — gelenkt von diesem Piloten und im Flug aufgehängt an diese rechten und linken Trägerfangleinen (3a) — sich in dynamischem Gleichgewicht befindet, wobei das Gleitstück (21) mit einer Markierungs- oder Indexeinrichtung versehen ist, die dessen Positionierung auf der Schiene (20) entsprechend dem Gewicht des Piloten erleichtert.

FIG. 1  FIG. 2  FIG. 3

FIG.6

21  23

29

22

20

31

FIG.4

33  23  21  24  32

28

26

29  25

27  22

30  30  20

31

0 217 686

FIG.5

22  21  20

30  29  23  30  31